# FASCICULE DE BREVET EUROPEEN

(11) **EP 1 719 299 B1**
(45) Date de publication et mention de la délivrance du brevet: **21.05.2008**
(21) Numéro de dépôt: 04705835.9
(22) Date de dépôt: 28.01.2004
(51) Int. Cl.: H04L 12/56, G07G 1/00

(54) **PROCEDE DE SELECTION D'UN DISPOSITIF PORTABLE POSSEDANT UNE ETIQUETTE ELECTRONIQUE**
VERFAHREN ZUR SELEKTION EINES MOBILEN GERÄTES, DAS EIN ELEKTONISCHES LABEL HAT
METHOD FOR SELECTING A PORTABLE DEVICE WITH AN ELECTRONIC TAG

(43) Date de publication de la demande: 08.11.2006
(73) Titulaire: FRANCE TELECOM, 75015 Paris (FR)
(72) Inventeur: BOUDET, François, 14190 FIERVILLE BRAY (FR); PETIT, Stéphane, F-14200 Hérouville Saint Clair (FR)
(74) Mandataire: Remy, Vincent Noel Paul
(86) Numéro de dépôt international: PCT/FR2004/000194
(87) Numéro de publication internationale: WO 2005/083949

(56) Documents cités:
- EP-A- 1 248 244
- US-A1- 2002 178 063

## Description

La présente invention concerne un procédé de sélection, par une borne, d'un dispositif portable parmi un ensemble de dispositifs portables. Elle concerne également un dispositif portable susceptible de communiquer avec une borne pour la mise en oeuvre de ce procédé et une borne de sélection d'un dispositif portable parmi un ensemble de dispositifs portables.

Un dispositif portable classique dispose généralement de moyens de communication dits de proximité, en plus de moyens de communication à travers des réseaux comme par exemple les réseaux GSM, WAP ou GPRS.

Ces moyens de communication de proximité sont basés sur des technologies sans fil de type WiFi, Bluetooth^{™}, Infra Rouge ou autre, et ont en général un rayon d'action de plusieurs mètres.

Dans certains cas, par exemple lorsqu'il s'agit de faire communiquer un dispositif portable avec un équipement fixe, désigné généralement par le terme de borne, plusieurs dispositifs portables peuvent se retrouver dans un même rayon d'action de la borne. Ces dispositifs portables sont alors dans ce cas tous susceptibles de recevoir des données diffusées par cette borne.

Or, dans le cas où la borne sert de borne de paiement, il peut être nécessaire de ne s'adresser qu'à un seul de ces dispositifs portables, avec lequel auront lieu des transactions financières.

La borne doit donc être capable de sélectionner un dispositif portable en particulier, choisi parmi un ensemble de dispositifs portables potentiellement susceptibles de convenir, alors que les moyens de communication de proximité précités ne sont pas assez directionnels pour permettre la sélection automatique de ce dispositif portable.

US2002/0178063 A1 décrit un procédé de sélection d'un dispositif portable pour une transaction financière. Ce dispositif contient une étiquette RFID. Cette étiquette contient un identifiant unique. Cet identifiant est recueilli par une borne lorsque le dispositif portable passe près de la borne. Les données associées à l'identifiant sont recueillies par la borne. La transaction est confirmée par utilisation d'un code d'identification de type PIN.

L'invention a notamment pour but de proposer une solution à ce problème assurant, de manière simple, la mise en relation d'une borne avec un dispositif portable en particulier.

A cet effet, l'invention a pour objet un procédé de sélection, par une borne, d'un dispositif portable parmi un ensemble de dispositifs portables, caractérisé par les étapes suivantes :
- lors d'une étape préalable, on crée, pour chaque dispositif portable, une étiquette électronique contenant un identifiant unique, et on stocke cet identifiant dans ce dispositif portable ;
- la borne recueille l'identifiant de l'une des étiquettes électroniques ;
- la borne envoie des données à chaque dispositif portable de l'ensemble par une liaison sans fil, ces données comportant l'identifiant recueilli ;
- seul le dispositif portable dont l'identifiant stocké correspond à l'identifiant recueilli par la borne, appelé dispositif sélectionné, renvoie un signal d'indication de sa présence à la borne.

Ainsi, selon le procédé de l'invention, on utilise une étiquette électronique, associée au dispositif portable devant être sélectionné, pour assurer le lien entre la borne et ce dispositif portable. En effet, un dispositif portable de l'ensemble ne répond à la borne que lorsque l'identifiant qui lui est associé est émis par cette borne, la borne émettant l'identifiant qu'elle a recueilli dans l'étiquette électronique.

Chaque identifiant étant unique, c'est assurément le dispositif portable concerné par la transaction avec la borne qui est ainsi sélectionné.

Un procédé de sélection selon l'invention peut en outre comporter l'une ou plusieurs des caractéristiques suivantes :
- la borne recueille l'identifiant de l'étiquette électronique par passage de cette étiquette électronique dans un dispositif de lecture relié à la borne ;
- les données envoyées à chaque dispositif portable par la borne comportent l'indication d'un montant à payer, et le signal indiquant la présence du dispositif sélectionné est un signal de validation de ce montant à payer.

L'invention a également pour objet un dispositif portable susceptible de communiquer avec une borne pour la mise en oeuvre du procédé selon l'invention, caractérisé en ce qu'il comporte :
- des moyens de stockage d'un identifiant, cet identifiant correspondant à un identifiant contenu dans une étiquette électronique associée à ce dispositif portable et distincte de celui-ci ;
- des moyens de réception sans fil d'une demande d'identification émise par la borne, cette demande comportant un identifiant recueilli par la borne ;
- des moyens de comparaison de l'identifiant recueilli avec l'identifiant stocké ;
- des moyens d'émission sans fil d'un signal d'indication de sa présence à la borne, si l'identifiant recueilli correspond à l'identifiant stocké.

L'invention a enfin pour objet une borne de sélection d'un dispositif portable parmi un ensemble de dispositifs portables comportant chacun un identifiant, caractérisé en ce qu'elle comporte :
- des moyens de lecture d'une étiquette électronique, en vue de recueillir un identifiant contenu dans cette étiquette ;
- des moyens d'émission sans fil d'une demande d'identification, cette demande comportant cet identifiant recueilli ;
- des moyens de réception sans fil d'un signal d'indication de la présence d'un dispositif portable dont l'identifiant correspond à l'identifiant recueilli.

L'invention sera mieux comprise à la lecture de la description qui va suivre, donnée uniquement à titre d'exemple et faite en se référant aux dessins annexés dans lesquels :
- la figure 1 est un schéma fonctionnel illustrant une étape préalable d'un procédé selon l'invention ;
- la figure 2 est un schéma organique d'une étiquette électronique ;
- la figure 3 est un schéma organique d'un dispositif portable selon l'invention ;
- la figure 4 représente schématiquement une installation pour la mise en oeuvre d'un procédé selon l'invention ;
- la figure 5 est un schéma représentant les étapes d'un procédé selon l'invention.

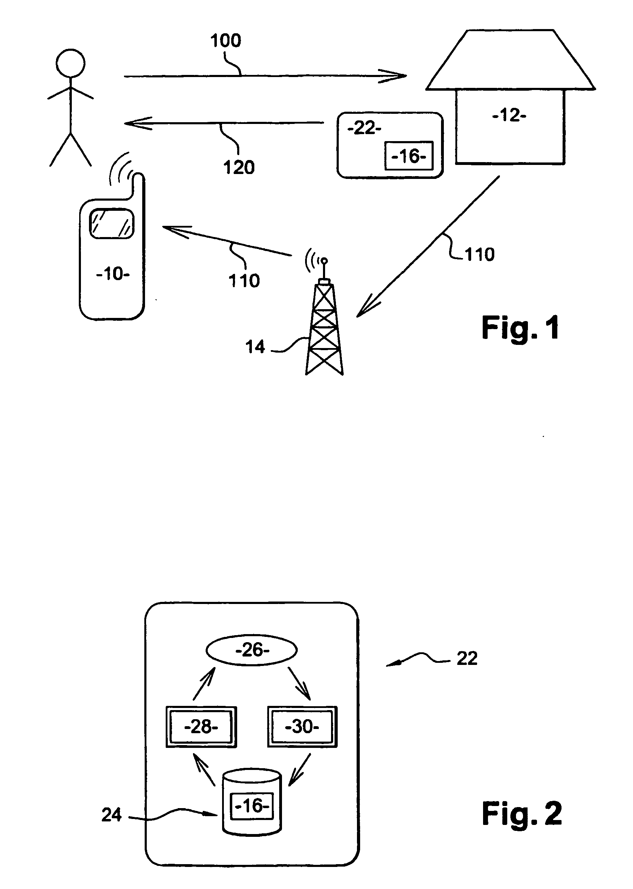

Un procédé de sélection selon l'invention prévoit une étape préalable décrite en référence à la figure 1.

L'utilisateur d'un dispositif portable 10 s'adresse à un organisme 12 lors d'une étape 100, en lui fournissant notamment des données permettant d'identifier son dispositif portable 10, par exemple son numéro s'il s'agit d'un téléphone portable.

En passant par exemple par un opérateur téléphonique 14, l'organisme 12 permet la mise en place d'un identifiant 16 dans ce dispositif portable 10, notamment par téléchargement de cet identifiant 16 par le dispositif portable 10 lors d'une étape 110.

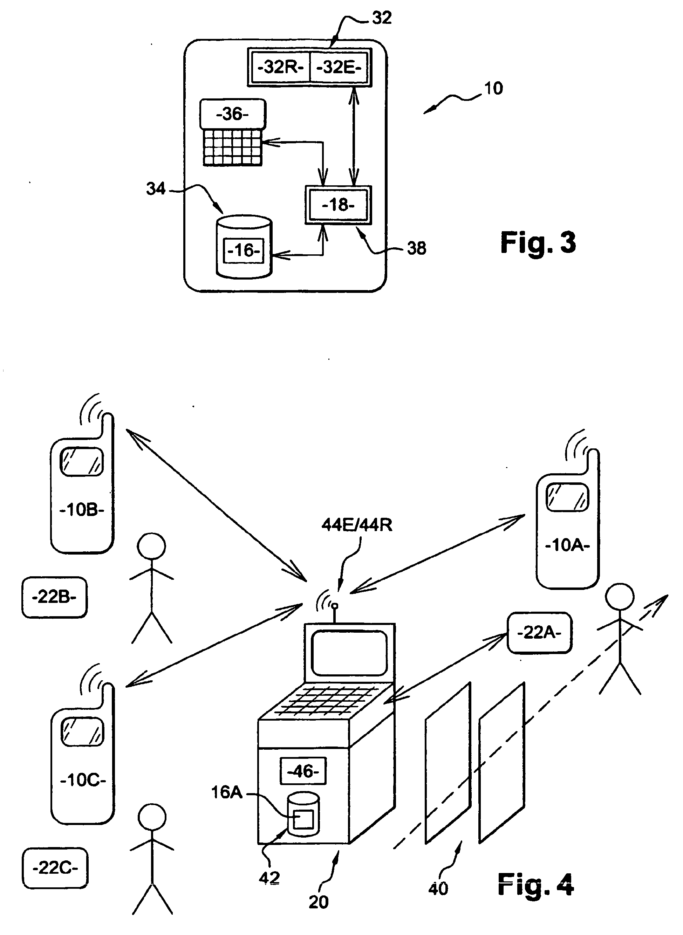

Lors de cette même étape 110, le dispositif portable 10 peut aussi télécharger un programme 18 qui permettra l'interaction de ce dispositif portable 10 avec une borne 20 (représentée sur la figure 4) lors de l'exécution d'un procédé de sélection du dispositif portable 10 par cette borne 20.

Par ailleurs, lors d'une étape 120, l'organisme 12 fournit à l'utilisateur du dispositif portable 10 une étiquette électronique 22, contenant l'identifiant 16. Cette étiquette électronique peut prendre diverses formes, par exemple une forme auto-collante ou une forme de jeton compatible avec des consignes de chariots de supermarché.

L'étiquette électronique 22, représentée sur la figure 2, comporte un module de mémoire 24 destiné à contenir l'identifiant 16. Elle comporte en outre des moyens 26 de transmission de données sans fil à courte distance, pour transmettre dans un rayon en général inférieur à 1 mètre.

L'étiquette électronique 22 comporte aussi des moyens 28 de lecture de l'identifiant 16, reliés aux moyens de transmission 26, et rendant alors ces moyens de transmission 26 susceptibles de transmettre l'identifiant 16.

L'étiquette électronique 22 comporte enfin des moyens de personnalisation 30, permettant notamment d'inscrire l'identifiant 16 dans la mémoire 24. Ces moyens de personnalisation 30 sont considérés comme connus de l'homme du métier.

Le dispositif portable 10, représenté plus en détail sur la figure 3, comporte des moyens 32 de communication sans fil, par exemple de type Bluetooth^{™} ou WiFi. Ces moyens de communication 32 comportent des moyens de réception 32R et des moyens d'émission 32E.

Le dispositif portable 10 comporte un module de mémoire 34, dans lequel est stocké l'identifiant 16.

Le dispositif portable 10 comporte en outre une interface 36, permettant de communiquer de manière bidirectionnelle avec l'utilisateur de ce dispositif portable 10.

Enfin, le dispositif 10 comporte des moyens 38 d'exécution du programme 18 téléchargé lors de l'étape 110.

La figure 4 représente une installation permettant la sélection, par la borne 20, d'un dispositif portable 10A parmi un ensemble de dispositifs portables 10A, 10B, 10C.

Après l'étape préalable décrite précédemment en référence à la figure 1, chaque dispositif portable 10A, 10B, 10C est associé à une étiquette électronique 22A, 22B. 22C contenant chacune un identifiant unique.

La borne 20 est susceptible de recueillir un identifiant 16A de l'étiquette électronique 22A, par exemple par passage de cette étiquette électronique 22A dans un dispositif de lecture 40 relié à la borne 20. Dans l'exemple représenté sur la figure 4, le dispositif de lecture 40 est agencé dans un portique traversé par l'utilisateur du dispositif portable 10A.

La borne 20 comporte un module de mémoire 42, qui stocke alors temporairement l'identifiant 16A.

La borne 20 comporte de plus des moyens de communication, par exemple de type Bluetooth^{™} ou Wifi. Les moyens de communication comportent des moyens de réception 44R, ainsi que des moyens d'émission 44E, ces moyens d'émission 44E lui permettant d'envoyer des données à chaque dispositif portable 10A, 10B, 10C de l'ensemble.

Ces données envoyées comportent d'une part l'identifiant 16A recueilli par la borne 20, et d'autre part, dans le cas où la borne 20 est une borne de paiement, l'indication d'un montant à payer.

Chaque dispositif portable 10A, 10B, 10C reçoit ces données par ses moyens de réception 32R.

Enfin, la borne 20 comporte des moyens classiques 46 de traitement informatique de transactions, permettant la réalisation d'un paiement.

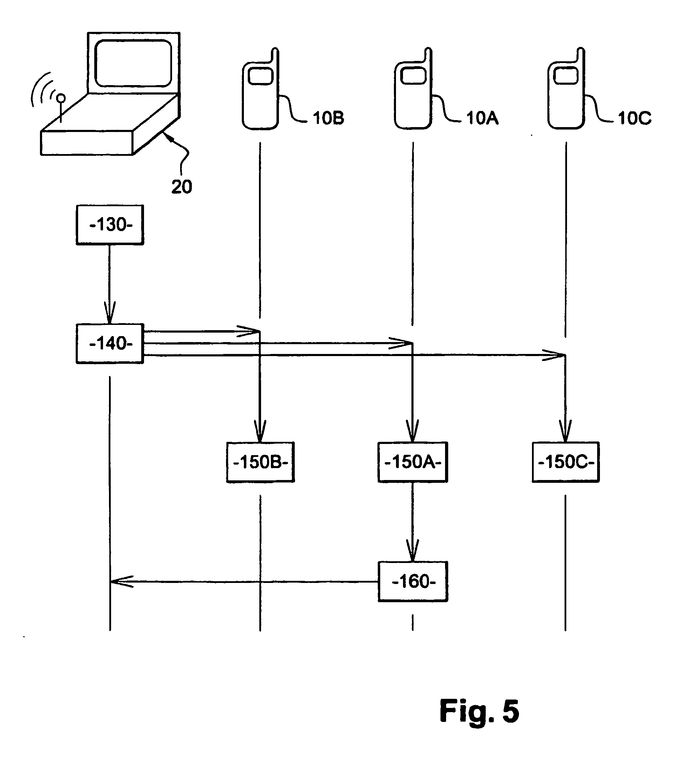

Le procédé de sélection mis en oeuvre par l'installation précédemment décrite est représenté en référence à la figure 5.

Lors d'une étape 130, la borne 20 recueille l'identifiant 16A, par passage de l'étiquette électronique 22A dans le dispositif de lecture 40.

La borne envoie alors les données précitées aux dispositifs portables 10A, 10B, 10C, lors d'une étape 140.

Lors d'étapes suivantes 150A, 150B et 150C, les dispositifs portables 10A, 10B, 10C comparent l'identifiant 16A envoyé par la borne 20 avec les identifiants que comportent respectivement leurs modules de mémoire 34. Cette comparaison est faite lors de l'exécution du programme que comportent les dispositifs portables 10A, 10B, 10C.

Les dispositifs portables 10B et 10C n'ayant pas le même identifiant que celui qui est envoyé par la borne 20, ils ignorent le reste des données envoyées, alors que le dispositif portable 10A, dont l'identifiant 16A correspond à l'identifiant envoyé par la borne 20, affiche sur son interface 36 le montant à payer envoyé par la borne 20.

Lors d'une étape 160, l'utilisateur du dispositif portable 10A valide ce montant à payer, et le dispositif portable 10A renvoie alors un signal à la borne 20, par ses moyens d'émission 32E, et indique ainsi sa présence, la borne 20 recevant ce signal par ses moyens 44R de réception.

La borne 20 est alors en mesure de réaliser le paiement, grâce aux moyens de traitement 46.

## Revendications

1. Procédé mis en oeuvre par une borne (20), comprenant les étapes suivantes :
- lors d'une étape préalable, on crée, pour chaque dispositif portable d'un ensemble de dispositifs portables (10A, 10B, 10C), une étiquette électronique (22A, 22B, 22C) contenant un identifiant unique, et on stocke cet identifiant dans ce dispositif portable (10A, 10B, 10C) ;
- la borne (20) recueille l'identifiant (16A) de l'une des étiquettes électroniques (22A) ;
le procédé étant **caractérisé en ce qu'**il effectue une sélection d'un dispositif portable parmi l'ensemble de dispositifs portables par les étapes suivantes :
- la borne (20) envoie des données à chaque dispositif portable (10A, 10B, 10C) de l'ensemble par une liaison sans fil, ces données comportant l'identifiant (16A) recueilli ;
- seul le dispositif portable (10A) dont l'identifiant stocké correspond à l'identifiant (16A) recueilli par la borne (20), appelé dispositif sélectionné, renvoie un signal d'indication de sa présence à la borne (20).

2. Procédé selon la revendication 1, **caractérisé en ce que** la borne (20) recueille l'identifiant (16A) de l'étiquette électronique (22A) par passage de cette étiquette électronique (22A) dans un dispositif de lecture (40) relié à la borne (20).

3. Procédé selon la revendication 1 ou 2, **caractérisé en ce que** les données envoyées à chaque dispositif portable (10A, 10B, 10C) par la borne (20) comportent l'indication d'un montant à payer, et **en ce que** le signal indiquant la présence du dispositif sélectionné (10A) est un signal de validation de ce montant à payer.

4. Dispositif portable (10) susceptible de communiquer avec une borne (20) pour la mise en oeuvre du procédé selon l'une quelconque des revendications 1 à 3, comportant :
- des moyens (34) de stockage d'un identifiant (16), cet identifiant (16) correspondant à un identifiant (16) contenu dans une étiquette électronique (22) associée à ce dispositif portable (10) et distincte de celui-ci ;
le dispositif étant **caractérisé en ce qu'**il comprend :
- des moyens (32R) de réception sans fil d'une demande d'identification émise par la borne (20), cette demande comportant un identifiant recueilli par la borne ;
- des moyens (38) de comparaison de l'identifiant recueilli avec l'identifiant stocké (16) ;
- des moyens (32E) d'émission sans fil d'un signal d'indication de sa présence à la borne (20), si l'identifiant recueilli correspond à l'identifiant stocké (16).

5. Borne (20) apte à coopérer avec au moins un dispositif portable (10A) parmi un ensemble de dispositifs portables (10A, 10B, 10C) comportant chacun un identifiant, la borne comportant :
- des moyens (40) de lecture d'une étiquette électronique (22A), en vue de recueillir un identifiant (16A) contenu dans cette étiquette (22A) ;
la borne étant **caractérisée en ce qu'**elle est apte à effectuer une sélection d'un dispositif portable parmi l'ensemble et **en ce qu'**elle comprend :
- des moyens d'émission sans fil (44E) d'une demande d'identification, cette demande comportant cet identifiant recueilli (16A) ;
- des moyens de réception sans fil (44R) d'un signal d'indication de la présence d'un dispositif portable (10A) dont l'identifiant correspond à l'identifiant recueilli.

## Claims

1. Method implemented by a terminal (20), comprising the following steps:
- in a preliminary step, an electronic label (22A, 22B, 22C), containing a unique identifier, is created for each portable device of a set of portable devices (10A, 10B, 10C), and this identifier is stored in this portable device (10A, 10B, 10C);
- the terminal (20) obtains the identifier (16A) of one of the electronic labels (22A), the method being **characterized in that** it selects a portable device from the set of portable devices by the following steps:
- the terminal (20) sends data to each portable device (10A, 10B, 10C) of the set via a wireless link, this data comprising the identifier (16A) obtained;
- only the portable device (10A) whose stored identifier corresponds to the identifier (16A) obtained by the terminal (20), called selected device, returns a signal indicating its presence to the terminal (20).

2. Method according to Claim 1, **characterized in that** the terminal (20) obtains the identifier (16A) of the electronic label (22A) by passing this electronic label (22A) into a reading device (40) linked to the terminal (20).

3. Method according to Claim 1 or 2, **characterized in that** the data sent to each portable device (10A, 10B, 10C) by the terminal (20) includes the indication of an amount to be paid, and **in that** the signal indicating the presence of the selected device (10A) is a signal validating this amount to be paid.

4. Portable device (10A) able to communicate with a terminal (20) for implementing the method according to any one of Claims 1 to 3, comprising:
- means (34) of storing an identifier (16), this identifier (16) corresponding to an identifier (16) contained in an electronic label (22) associated with this portable device (10) and separate from the latter, the device being **characterized in that** it comprises:
- means (32R) of wirelessly receiving an identification request sent by the terminal (20), this request including an identifier obtained by the terminal;
- means (38) of comparing the obtained identifier with the stored identifier (16);
- means (32E) of wirelessly sending a signal indicating its presence to the terminal (20), if the obtained identifier corresponds to the stored identifier (16).

5. Terminal (20) which is capable of cooperating with at least one portable device (10A) from a set of portable devices (10A, 10B, 10C), each comprising an identifier, the terminal comprising:
- means (40) of reading an electronic label (22A), in order to obtain an identifier (16A) contained in this label (22A), the terminal being **characterized in that** it is capable of selecting a portable device from the set and **in that** it comprises:
- means (44E) of wirelessly sending an identification request, this request including this obtained identifier (16A);
- means (44R) of wirelessly receiving a signal indicating the presence of a portable device (10A) whose identifier corresponds to the obtained identifier.

## Patentansprüche

1. Verfahren durchgeführt durch eine Station (20), umfassend die folgenden Schritte:
- in einem vorläufigen Schritt wird für jede tragbare Vorrichtung aus einer Gesamtheit von tragbaren Vorrichtungen (10A, 10B, 10C) ein elektronisches Label (22A, 22B, 22C) erstellt, das eine eindeutige Kennung enthält, und diese Kennung wird in der tragbaren Vorrichtung (10A, 10B, 10C) gespeichert;
- die Station (20) nimmt die Kennung (16A) von einem der elektronischen Label (22A) auf, wobei das Verfahren **dadurch gekennzeichnet ist, dass** es eine tragbare Vorrichtung aus der Gesamtheit von tragbaren Vorrichtungen durch die folgenden Schritte auswahlt:
- die Station (20) schickt Daten über eine drahtlose Verbindung an jede tragbare Vorrichtung (10A), 10B, 10C) der Gesamtheit, wobei diese Daten die aufgenommene Kennung (16A) aufweisen;
- nur die tragbare Vorrichtung (10A), deren gespeicherte Kennung der von der Station (20) aufgenommenen Kennung (16A) entspricht, genannt ausgewählte Vorrichtung, schickt ein Signal zur Anzeige ihres Vorhandenseins an die Station (20).

2. Verfahren nach Anspruch 1, **dadurch gekennzeichnet, dass** die Station (20) die Kennung (16A) des elektronischen Labels (22A) durch den Durchlauf dieses elektronischen labels (22A) durch eine Lesevorrichtung (40), die mit der Station (20) verbunden ist, aufnimmt.

3. Verfahren nach Anspruch 1 oder 2, **dadurch gekennzeichnet**, das die Daten, die von der Station (20) an jede tragbare Vorrichtung (10A, 10B, 10C) geschickt werden, die Angabe eines zu zahlenden Betrages aufweisen, und dass das Signal, das das Vorhandensein der ausgewählten Vorrichtung (10A) anzeigt, ein Signal zur Bestätigung dieses zu zahlenden betrages ist.

4. Tragbare Vorrichtung (10), die mit einer Station (20) zur Durchführung des Verfahrens nach einem der Ansprüche 1 bis 3 kommunizieren kann, umfassend Folgendes:
- Mittel (34) zur Speicherung einer Kennung (16), wobei diese Kennung (16) einer Kennung (16) entspricht, die in einem elektronischen label (22), das mit der tragbaren Vorrichtung **dadurch gekennzeichnet ist, dass** sie Folgendes enthält:
- Mittel (32R) zum drahtlosen Empfang einer Erkennungsanforderung, die von der Station (20) gesendet wird, wobei diese Anforderung eine von der Station aufgenommene Kennung aufweist;
- Mittel (38) zum Vergleich der aufgenommenen Kennung mit der gespeicherten Kennung (16);
- Mittel (32E) zum drahtlosen Senden eines Signals zur Anzeige ihres Vorhandenseins an die Station (20), falls die aufgenommene Kennung der gespeicherten Kennung (16) entspricht.

5. Station (20), die fähig ist, mit Mindestens einer tragbaren Vorrichtung (10A) aus einer Gesamtheit von tragbaren Vorrichtungen (10A, 10B, 10C) zusammenzuwirken, die jeweils eine Kennung aufweisen, wobei die Station Folgendes aufweist:
- Mittel (40) zum Lesen eines elektronischen Labels (22A), um eine Kennung (16A), die in diesem Label (22A) enthalten ist, aufzunehmen, wobei die Station **dadurch gekennzeichnet ist, dass** sie fähig ist, eine tragbare Vorrichtung aus der Gesamtheit auszuwählen und dass die Folgendes enthält:
- Mittel zum drahtlosen Senden (44E) einer Erkennungsanforderung, wobei die Anforderung die aufgenommene Kennung (16A) aufweist;
- Mittel zum drahtlosen Empfang (44R) eines Signals zur Anzeige des Vorhandenseins einer tragbaren Vorrichtung (10A), deren Kennung der aufgenommenen Kennung entspricht.
